# EUROPÄISCHE PATENTANMELDUNG

(11) **EP 0 849 026 A1**
(43) Veröffentlichungstag der Anmeldung: **24.06.1998**
(21) Anmeldenummer: 96119911.4
(22) Anmeldetag: 12.12.1996
(51) Int. Cl.: B23K 9/29

(54) **Schutzgasschweissbrenner**

(71) Anmelder: Mechafin AG, 8954 Geroldswil (CH)
(72) Erfinder: Kunz,Erwin, 8102 Oberengstringen (CH)
(74) Vertreter: Blum, Rudolf Emil Ernst

(57) **Zusammenfassung**

Der Schutzgasschweissbrenner besitzt stromführende Teile (1 - 4) im Innern, welche von einer Schutzgasdüse (15), einem Zwischenstück (14) und einem äusseren Halsteil (12, 13) umgeben sind. Das Zwischenstück (14) ist mit einem links drehenden Innengewinde (17) am äusseren Halsteil (12) befestigt und trägt auf einem vorderen Aussengewinde (20) die Schutzgasdüse (15), wodurch sich ein schlanker Aufbau ergibt. Die stromführenden Teile (1 - 4) sind von Isolationsmänteln (24, 25, 26) umgeben, um einen Durchschlag zu verhindern. Dabei ist zumindest ein mittleren Isolationsmantel (25) beidseitig mit Wärmeleitpaste eingestrichen, so dass sich eine gute Wärmeableitung zum gekühlten inneren Halsteil (1, 4) ergibt.

## Beschreibung

Die Erfindung betrifft einen Schutzgasschweissbrenner gemäss Oberbegriff der Unabhängigen Ansprüche.

Schutzgasschweissbrenner, wie sie zum Beispiel beim MIG-Bogenschweissen verwendet werden, sind hohen Betriebstemperaturen ausgesetzt und müssen deshalb die Wärme gut abführen. Deshalb ist es notwendig, sowohl für die Gasdüse also auch für die Kontaktdüse eine gute Wärmeableitung zu gewährleisten. Eine entsprechende Vorrichtung mit Wasserkühlung ist zum Beispiel in EP-A-376 015 offenbart. Andererseits soll der Aufbau möglichst schlank sein, so dass auch schwer zugängliche Stellen geschweisst werden können. In der Regel ist deshalb ein Kompromiss zwischen Kompaktheit und Wärmefestigkeit zu treffen.

Es stellt sich deshalb die Aufgabe, einen Schutzgasschweissbrenner der eingangs genannten Art bereitzustellen, der möglichst schlank ist und dennoch eine gute Wärmefestigkeit bzw. Wärmeableitung besitzt. Diese Aufgabe wird vom Gegenstand der unabhängigen Ansprüche gelöst.

In einer ersten Ausführung der Erfindung wird ein besonders schlanker Aufbau erreicht, indem zwischen Schutzgasdüse und äusserem Halsstück ein Zwischenstück angeordnet ist, welches ein Innengewinde aufweist, das auf das äussere Halsstück aufgeschraubt werden kann. Dadurch entfällt die übliche Überwurfmutter, die zur Befestigung des Zwischenstücks bzw. der Gasdüse eingesetzt wird. Gleichzeitig wird durch die direkte Schraubverbindung zwischen äusserem Halsteil und Zwischenstück eine gute thermische und mechanische Verbindung der beiden Teile erreicht. Die bessere mechanische Verbindung er-laubt wiederum einen kompakteren Aufbau, da die Masstoleranzen kleiner sind, und sie verbessert die Wärmeableitung, da Luftspalten vermieden bzw. verkleinert werden. Die geringen Masstoleranzen, und insbesondere die dadurch genau definierte Länge des Kopfes, sind auch beim automatisierten Schweissen von Vorteil.

Ein erfindungsgemässer Schweissbrenner kann ferner einfach auseinandergenommen werden, da alle zu wartenden Teile von vorne auf den Kopf aufschraubbar sind. Damit vereinfacht sich die Wartung.

Vorzugsweise weist das Zwischenstück ein vorderes Aussengewinde auf, auf welches die Schutzgasdüse aufgeschraubt wird, so dass ein guter thermischer und mechanischer Kontakt zwischen Düse und Zwischenstück gewährleistet ist. Um den Zusammenbau und das Auseinandernehmen zu vereinfachen, sollte das vordere Aussengewinde einen Schraubsinn umgekehrt zum hinteren Innengewinde des Zwischenstücks aufweisen, so dass die beiden Verbindungen gezielt gelöst bzw. festgezogen werden können.

In einer weiteren Ausführung der Erfindung wird der kompakte Aufbau und die gute Wärmeleitfähigkeit dadurch erreicht bzw. verbessert, dass zwischen dem gekühlten inneren Halsstück und den äusseren nicht stromführenden Teilen des Kopfes ein elektrisch isolierender Mantel, vorzugsweise aus Keramik, vorgesehen ist, wobei zwischen dem Isolationsmantel und dem inneren Halsstück und/oder den nicht stromführenden Aussenteilen Wärmeleitpaste eingebracht ist. Keramik wird bevorzugt, da sie gleichzeitig hitzebeständig, gut wärmeleitend und elektrisch isolierend ist. Mit dem Isolationsmantel wird die nötige Durchschlagfestigkeit gewährleistet. Durch die Wärmeleitpaste wird erreicht, dass trotz mechanischer Toleranzen bzw. rauher Oberflächen ein guter thermischer Kontakt zur Abführung der Wärme vermittelt werden kann.

Weitere bevorzugte Ausführungen sind in den abhängigen Ansprüchen sowie in der nun folgenden Beschreibung anhand der Figuren aufgeführt. Dabei zeigen:
Fig. 1 einen Schnitt durch einen erfindungsgemässen Schutzgasschweissbrenner,
Fig. 2 eine Explosionszeichnung des Schweissbrenners nach Fig. 1, wobei die Kontaktdüse nicht gezeigt wird, und
Fig. 3 den Schweissbrenner nach Fig. 1 an einem Roboterarm.

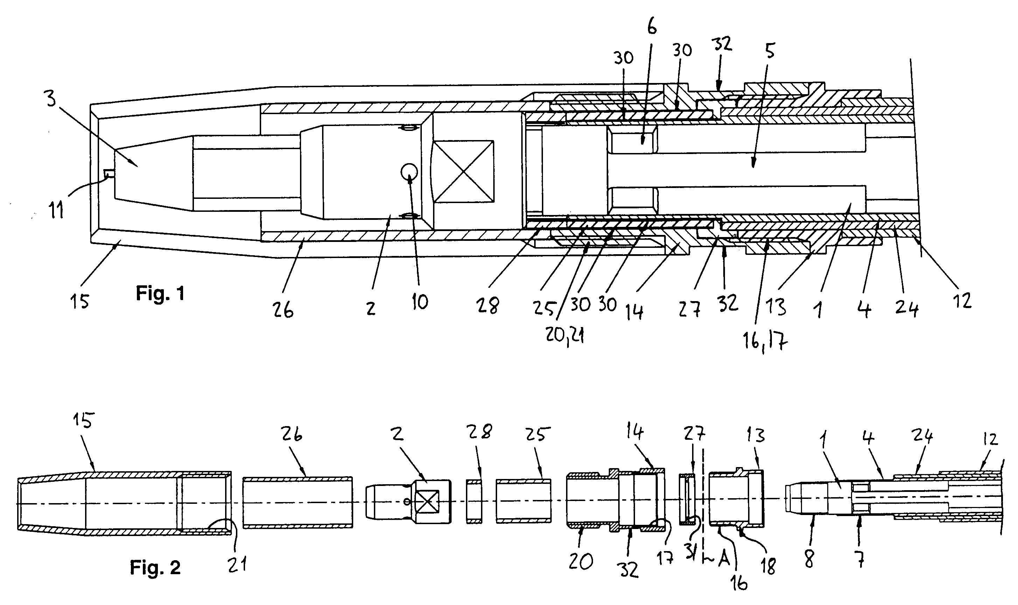

Der Grundaufbau eines erfindungsgemässen Schutzgasschweissbrenners wird in den Figuren 1 und 2 gezeigt. Dabei sind die meisten stromführenden Teile in derSeitenansicht und die übrigen Teile im Schnitt dargestellt.

Im Innern des Schweissbrenners sind die stromführenden Teile angeordnet. Es sind dies ein inneres Halsstück 1, 4 ein Kontaktdüsenhalter 2 und die Kontaktdüse 3. Alle diese Teile bilden einen (nicht gezeigten) zentralen Kanal zur Aufnahme des Schweissdrahts 11. Das innere Halsstück 1, 4 und die Kontaktdüse 3 sind zur Gewährleistung guter thermischer und elektrischer Wärmeleitfähigkeit aus Kupfer, der Kontaktdüsenhalter 2 ist aus Messing oder Kupfer.

Das innere Halsstück 1, 4 erstreckt sich durch den Hals des Schweissbrenners bis in dessen Kopf. Es ist rohrförmig aufgebaut. In seinem Inneren verläuft ein Kanal, durch welchen das Schutzgas und der Schweissdraht geführt werden. Sein Mantel ist zweiteilig ausgeführt. Ein innerer Teil 1 bildet auf seiner Aussenseite Kanäle 5, 6 für die Zirkulation von Kühlwasser. Ein äusserer, zylindrischer Teil 4 liegt fest auf dem inneren Teil 1 auf und verschliesst die Kanäle 5, 6 gegen aussen. Der äussere Teil ist in seinem vorderen Endbereich 7 abgedreht, so dass er dort eine Dicke von nur 0.5 mm aufweist, was einen guten Wärmeaustausch mit den aussenliegenden Teilen gewährleistet.

Am vorderen Ende des inneren Halsstücks 1, 4 ist ein Aussengewinde 8 ausgeformt, auf welches der Kontaktdüsenhalter 2 aufgeschraubt ist. Der Kontaktdüsenhalter 2 besitzt einen (nicht gezeigten) achsialen Kanal für den Schweissdraht sowie radiale Kanäle 10 für das Schutzgas, durch welche dieses in den Zwischenraum zwischen Kontaktdüse 3 und Schutzgasdüse 15 tritt.

Am vorderen Ende des Kontaktdüsenhalters 2 ist ein Innengewinde (nicht gezeigt) angebracht, in welches die Kontaktdüse 3 eingeschraubt ist.

Die nicht stromführenden Metallteile des Schweissbrenners sind an dessen Aussenseite angeordnet. Es sind dies ein äusseres Halsstück 12 mit einem Befestigungsflansch 13, ein Zwischenstück 14 und die Schutzgasdüse 15. Die Schutzgasdüse 15 ist aus Kupfer, die übrigen dieser Teile aus Messing oder Kupfer.

Das äussere Halsstück 12 hat die Form eines einfachen Rohrs und erstreckt sich entlang der Aussenseite des Brennerhalses bis zum Kopf. Am vorderen Ende ist der Befestigungsflansch 13 auf dieses Rohr aufgelötet.

Der Befestigungsflansch 13 des äusseren Halsstücks 12 besitzt ein Aussengewinde 16, in welches ein hinteres Innengewinde 17 des Zwischenstücks 14 eingreift. Ein Absatz 18 des Befestignungsflansches bildet einen definierten Anschlag für das Zwischenstück 14.

Das Zwischenstück 14 ist im wesentlichen zylinderförmig aufgebaut und ist an seinem vorderen Ende mit einem Aussengewinde 20 versehen. Auf dieses Aussengewinde 20 ist die Schutzgasdüse 15 aufgeschraubt, welche hierzu mit einem entsprechenden Innengewinde 21 versehen ist.

Zwischen den stromführenden Teilen im Innern des Brenners und den Metallteilen an dessen Aussenseite sind zur elektrischen Isolation Isolationsmittel vorgesehen. Es sind dies ein hinterer Mantel 24, ein mittlerer Mantel 25, ein vorderer Mantel 26 sowie Isolationsringe 27 und 28.

Der hintere Mantel 24 besteht aus Kunststoff, vorzugsweise PTFE, und isoliert das inneren Halsstück 1,4 vom äusseren Halsstück 12. An seinem vorderen Ende steht er etwas über den Befestigungsflansch 13 des äusseren Halsstücks vor, ist aber kürzer als das innere Halsstück.

Zwischen dem vorderen Ende des inneren Halsstücks 1,4, welches bis über das Zwischenstück 14 hinaus in den Brennerkopf ragt, und dem Zwischenstück 14 ist der mittlere Mantel 25 angeordnet, welcher als Keramikrohr ausgebildet ist.

Der Ring 27 ist im Bereich zwischen dem mittleren Mantel 25 und dem hinteren Mantel 24 angeordnet. Er besitzt einen T-förmigen Querschnitt und bildet eine innere Rippe, die sich in einen Spalt zwischen dem mittleren und hinteren Mantel 25 bzw. 24 erstreckt. Der Ring 27 ist vorzugsweise aus PTFE und verhindert ein Durchschlagen in diesem Bereich.

Am vorderen Ende des mittleren Mantels 25 ist ein zweiter Ring 28 aus Kunststoff angeordnet, der vom eingeschraubten Kontaktdüsenhalter 2 gegen den mittleren Mantel 25 gedrückt wird und somit diesen festhält. Durch den Druck des Kontaktdüsenhalters 2 werden die isolierenden Teile spaltfrei aneinander gedrückt, was die Durchschlagfestigkeit erhöht.

Der vordere Mantel 26 ist an der Innenseite der Schutzgasdüse 15 angeordnet und isoliert diese gegen innen, insbesondere gegen den Kontaktdüsenhalter 2 und die Kontaktdüse 3.

Zur Verbesserung der thermischen Leitfähigkeit zwischen dem Zwischenstück 14 und dem gekühlten inneren Halsstück 1, 4 sind die Innen- und Aussenseiten des mittleren Isolationsmantels 25 und der Ringe 27, 28 mit Wärmeleitpaste 30 bestrichen. Dabei handelt es sich um Wärmeleitpaste, wie sie zum Beispiel zur Verbindung von Halbleiterbauelementen mit Kühlkörpern eingesetzt wird. Es zeigt sich, dass die Wärmeleitpaste auch die Gefahr eines elektrischen Durchschlags vermindert.

Zur Wartung können alle der in Fig. 2 rechts der Linie A dargestellten Teile in einfacher Weise demontiert bzw. montiert werden.

Bei der Montage geht man vom Halsteil aus, welcher aus den hinteren Halsstücken 1, 4 bzw. 12 mit dem Befestigungsflansch 13 und dem hinteren Isolationsmantel 24 besteht. In einem ersten Schritt wird nun der vordere Endbereich 7 des inneren Halsstücks mit Wärmeleitpaste 30 bestrichen. Sodann wird der T-förmige Ring 27 und der mittlere Isolationsmantel 25 von vorne her über das innere Halsstück gesteckt. Diese Teile werden nun auch von aussen mit Wärmeleitpaste 30 bestrichen. Dann wird das Zwischenstück 14 von vorne aufgesteckt und im Linksgewinde 16 festgeschraubt. In einem nächsten Schritt wird der zweite Ring 28 mit Wärmeleitpaste bestrichen und ebenfalls auf den inneren Halsteil aufgesteckt. Jetzt werden der Kontaktdüsenhalter 2 und die Kontaktdüse 3 aufgeschraubt. Sodann wird der vordere Mantel 26 von hinten in die Schutzgasdüse 15 eingeschoben, die beiden Teile über den Brennerkopf gesteckt und im Rechtsgewinde 20 festgeschraubt.

Bei der Demontage wird in umgekehrter Reihenfolge vorgegangen.

Somit sind insbesondere der mittlere Isolationsmantel 25, die vordere Oberfläche 7 des inneren Halsteils und die Innenfläche des Zwischenstücks 14 zur Wartung gut zugänglich. Dies ist wichtig, da deren einwandfreier Zustand zur Gewährleistung einer guten Wärmeableitung sichergestellt sein muss.

Der Brennerkopf ist sehr schlank, was insbesondere beim Schweissen schwer zugänglicher Stellen von Vorteil ist. Dies wird dadurch erreicht, dass das Zwischenstück 14 von aussen auf das Halsstück aufgeschraubt wird, so dass eine Überwurfmutter entfallen kann. Zum Ansatz eines Schraubschlüssels sind entsprechende Flächen 32 am Zwischenstück 14 vorgesehen. Diese Flächen werden durch gegenüberliegende Ausnehmungen gebildet, die in der zylindrische Aussenfläche des Zwischenstücks eingefräst sind, so dass überstehende Teile in diesem Bereich vermieden werden.

Durch die effiziente Wärmeübertragung zwischen dem gekühlten inneren Halsteil und dem Zwischenstück kann der Aussendurchmesser des Kopfs weiter gesenkt werden, da die Wärme von der Schutzgasdüse 15, welche sich bis über das Zwischenstück 14 erstreckt, direkt nach innen abgeleitet wird.

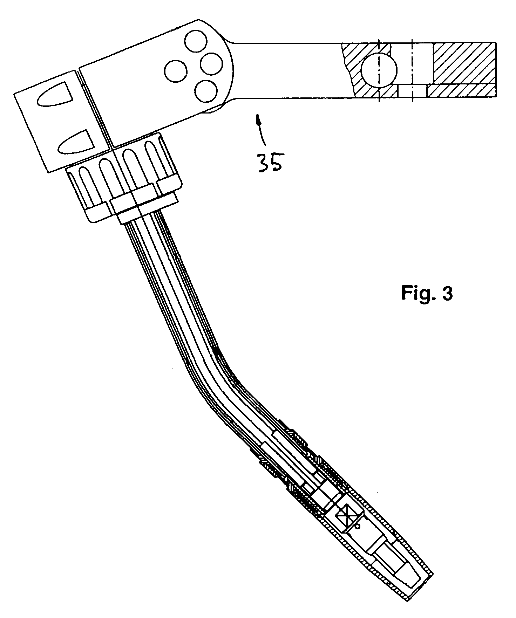

Der Schweissbrenner nach Fig. 1 eignet sich sowohl für Handgeräte als auch zur Führung durch Roboter. So zeigt Fig. 3 eine mögliche Montage des Kopfes an einem Roboterarm 35. In dieser Ausführung ist der Hals gebogen ausgeführt. Selbstverständlich kann er aber auch gerade sein.

Sowohl im Handbetrieb als auch bei der Führung durch einen Roboter bildet der erfindungsgemässe Schweissbrenner dank seiner schlanken Form und seiner guten Wärmeableitung ein praktisches und vielseitig einsetzbares Werkzeug. Dies wird insbesondere durch die Ausformung des Zwischenstücks 14, aber auch durch die Anordnung der Isolationsmäntel und der Wärmeleitpaste 30 erreicht. Beide diese Mittel können Jedoch auch getrennt voneinander eingesetzt werden. Der Anmelder behält sich deshalb vor, die beiden unabhängigen Ansprüche zu vertauschen, da die vom ersten unabhängigen Anspruch abhängigen Ansprüche auch in Abhängigkeit vom zweiten unabhängigen Anspruch ihre vorteilhaften Wirkungen zeigen. Ferner können beide unabhängigen Ansprüche auch als abhängige Ansprüche vom jeweils anderen unabhängigen Anspruch formuliert werden.

## Patentansprüche

1. Schutzgasschweissbrenner mit stromführenden inneren (1 - 4) und nicht stromführenden äusseren (12, 13, 14, 15) Teilen und Isolationsmitteln (24 - 28) zwischen den stromführenden und den nicht stromführenden Teilen, wobei die stromführenden Teile ein inneres Halsstück (1, 4) und eine Kontaktdüse (3), die nicht stromführenden Teile ein äusseres Halsstück (12), ein an das äussere Halsstück (12, 13) anschliessendes Zwischenstück (14) und eine an das Zwischenstück (14) anschliessende Schutzgasdüse (15) aufweisen, dadurch gekennzeichnet, dass am äusseren Halsstück (12, 13) ein vorderes Aussengewinde (16) und am Zwischenstück (14) ein darin eingreifendes hinteres Innengewinde (17) ausgeformt ist.

2. Schutzgasschweissbrenner nach Anspruch 1, dadurch gekennzeichnet, dass am Zwischenstück (14) ein vorderes Aussengewinde (20) und an der Schutzgasdüse (15) ein darin eingreifendes hinteres Innengewinde (21) ausgeformt ist.

3. Schutzgasschweissbrenner nach Anspruch 2, dadurch gekennzeichnet, dass das vordere Aussengewinde (20) des Zwischenstückes (14) in umgekehrten Sinn zum hinteren Innengewinde (17) des Zwischenstückes (14) gedreht ist.

4. Schutzgasschweissbrenner nach einem der vorangehenden Ansprüche, dadurch gekennzeichnet, dass das innere Halsstück (1,4) wassergekühlt ist.

5. Schutzgasschweissbrenner nach einem der vorangehenden Ansprüche, dadurch gekennzeichnet, dass das innere Halsstück (1,4) sich zumindest bis in das Zwischenstück (14) erstreckt.

6. Schutzgasschweissbrenner nach Anspruch 5, dadurch gekennzeichnet, dass zwischen dem inneren Halsstück (1, 4) und dem Zwischenstück (14) ein erster Isolationsmantel (25), insbesondere aus Keramik, angeordnet ist.

7. Schutzgasschweissbrenner nach Anspruch 6, dadurch gekennzeichnet, dass zwischen dem inneren Halsstück (1, 4) und dem äusseren Halsstück (12) ein zweiter Isolationsmantel (24) angeordnet ist, und dass im Bereich zwischen dem ersten Isolationsmantel (25) und dem zweiten Isolationsmantel (24) ein Isolationsring (27) angeordnet ist, an dessen Innenseite eine Rippe (31) verläuft, die zwischen den ersten und den zweiten Isolationsmantel eingreift.

8. Schutzgasschweissbrenner nach einem der Ansprüche 6 oder 7, dadurch gekennzeichnet, dass zwischen dem inneren Halsstück (1, 4) und dem ersten Isolationsmantel (25) und/oder zwischen dem ersten Isolationsmantel (25) und dem Zwischenstück (14) Wärmeleitpaste (30) angeordnet ist.

9. Schutzgasschweissbrenner nach einem der Ansprüche 6 - 8, dadurch gekennzeichnet, dass der erste Isolationsmantel (25) über ein vorderes Ende des inneren Halsstücks (1, 4) aufschiebbar ist.

10. Schutzgasschweissbrenner nach einem der Ansprüche 6 - 9, dadurch gekennzeichnet, dass die Schutzgasdüse (15) bis in den Bereich des ersten Isolationsmantels (25) von aussen am Zwischenstück (14) anliegt.

11. Schutzgasschweissbrenner nach einem der vorangehenden Ansprüche, dadurch gekennzeichnet, dass zwischen dem inneren Halsstück (14) und der Kontaktdüse (3) ein Kontaktdüsenhalter (2) angeordnet ist, welcher mindestens einen Gasdurchtritt (10) für Schutzgas bildet und mit dem inneren Halsstück (1, 4) und der Kontaktdüse (3) verbunden ist.

12. Schutzgasschweissbrenner nach einem der Ansprüche 6 - 10 und Anspruch 11, dadurch gekennzeichnet, dass der Kontaktdüsenhalter (2) einen achsialen Druck auf den ersten Isolationsmantel (25) ausübt.

13. Schutzgasschweissbrenner nach einem der vorangehenden Ansprüche, dadurch gekennzeichnet, dass ein hinteres Ende des Zwischenstückes an einem Anschlag des äusseren Halsstücks ansteht.

14. Schutzgasschweissbrenner nach einem der vorangehenden Ansprüche, dadurch gekennzeichnet, dass die stromführenden Teile einen Kanal für einen Schweissdraht (11) und/oder einen Kanal für Schutzgas bilden, und/oder dass in der Schutzgasdüse (15) ein dritter, vorzugsweise vom hinteren Ende in die Schutzgasdüse (15) einsteckbarer Isolationsmantel (26) angeordnet ist.

15. Schutzgasschweissbrenner nach einem der vorangehenden Ansprüche, dadurch gekennzeichnet, dass das Zwischenstück (14) eine im wesentlichen zylindrische Aussenfläche besitzt, in welche mindestens zwei Ausnehmungen eingefräst sind, welche mindestens zwei parallele Flächen (32) zum Angriff für einen Schraubschlüssel bilden, und/oder dass der Aussendurchmesser des Zwischenstücks (14) nicht grösser als der Aussendurchmesser der übrigen nicht stromführenden Teile ist.

16. Schutzgasschweissbrenner, insbesondere nach einem der vorangehenden Ansprüche, mit stromführenden inneren (1, 4) und nicht stromführenden äusseren (12, 14, 15) Teilen und Isolationsmitteln (24 - 28) zwischen den inneren und den äusseren Teilen, wobei die stromführenden Teile ein gekühltes inneres Halsstück (1, 4) und eine Kontaktdüse (3) und die nicht stromführenden Teile ein äusseres Halsstück (12) und ein Kopfstück (14, 15) aufweisen, wobei das Kopfstück (14, 15) eine Schutzgasdüse (15) bildet, dadurch gekennzeichnet, dass zwischen dem inneren Halsstück (1, 4) und dem Kopfstück (14, 15) ein Isolationsmantel (25) angeordnet ist, und dass zwischen dem inneren Halsstück (1, 4) und dem Isolationsmantel (25) und/oder zwischen dem Isolationsmantel (25) und dem Kopfstück (14, 15) Wärmeleitpaste (30) angeordnet ist.

17. Schutzgasschweissbrenner nach Anspruch 16, dadurch gekennzeichnet, dass das Kopfstück (14, 15) zweiteilig ausgebildet ist, wobei ein erster Teil die Schutzgasdüse (15) und ein zweiter Teil ein Zwischenstück (14) bildet, wobei das Zwischenstück (14) von vorne auf das äussere Halsstück (12, 13) und die Schutzgasdüse (15) auf das Zwischenstück (14) aufschraubbar sind, und der Isolationsmantel (25) von vorne auf das innere Halsstück (1, 4)aufsteckbar ist.
